(19) Europäisches Patentamt
European Patent Office
Office européen des brevets

(11) EP 0 718 354 B1

(12) EUROPÄISCHE PATENTSCHRIFT

(45) Veröffentlichungstag und Bekanntmachung des Hinweises auf die Patenterteilung:
**14.04.1999 Patentblatt 1999/15**

(51) Int Cl.[6]: **C08K 5/50**, C08L 69/00

(21) Anmeldenummer: **95119366.3**

(22) Anmeldetag: **08.12.1995**

# (54) Arylphosphin-haltige Polycarbonate

Arylphosphine-containing polycarbonates

Polycarbonates contenant des phosphines aryliques

(84) Benannte Vertragsstaaten:
**BE DE IT NL**

(30) Priorität: **21.12.1994 DE 4445786**

(43) Veröffentlichungstag der Anmeldung:
**26.06.1996 Patentblatt 1996/26**

(73) Patentinhaber: **BAYER AG**
**51368 Leverkusen (DE)**

(72) Erfinder:
- **Meier, Helmut Martin, Dr.**
  **D-40883 Ratingen (DE)**
- **Löwer, Hartmut, Dr.**
  **D-47802 Krefeld (DE)**
- **Ebert, Wolfgang, Dr.**
  **D-47800 Krefeld (DE)**
- **Wulff, Klaus, Dr.**
  **D-47800 Krefeld (DE)**

(56) Entgegenhaltungen:
**EP-A- 0 043 998**
**EP-A- 0 143 906**
**EP-A- 0 213 413**
**NL-C- 121 979**
**US-A- 3 637 907**
**US-A- 3 681 481**
**US-A- 4 092 288**

- **DATABASE WPI Section Ch, Week 9416 Derwent Publications Ltd., London, GB; Class A18, AN 94-132192 XP002027277 & JP 06 080 885 A (ASAHI KASEI KOGYO KK) , 22.März 1994**

EP 0 718 354 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Stabilisierung von speziellen Polycarbonaten mit Triphenylphosphin ist bekannt aus EP 213 413. Ebenfalls ist bekannt, nach EP 559 953 Phosphonite als Wärmestabilisatoren einzusetzen. EP-A 143 906, EP-A 43 998 und EP-A 213 413 offenbaren die Verwendung von Triphenylphosphin und Trisnaphthylphosphin zur Stabilisierung von Polycarbonat. Es hat sich nun gezeigt, daß es zu Ausdampfungen von Triphenylphosphin während der Verarbeitung von Polycarbonaten kommen kann, wobei auf Dauer unverwünschte Formenbeläge auf den Maschinen auftreten können.

Aufgabe der vorliegenden Erfindung ist es somit, Stabilisatoren zu entwickeln, die weniger flüchtig sind und ein verbessertes Stabilisierungsverhalten in Polycarbonaten zeigen.

Überraschend wurde nun gefunden, daß es möglich ist, durch die Verwendung von speziellen Aryl-Phosphinen, die auch Alkylketten enthalten können, Polycarbonate gut zu stabilisieren und die Flüchtigkeit der Stabilisatoren zu verringern und so den Stand der Technik deutlich zu übertreffen. Die Überlegenheit gegenüber den bekannten Triphenylphosphin-Stabilisatoren war nicht zu erwarten.

Gegenstand der vorliegenden Erfindung sind somit thermoplastische, aromatische Polycarbonate mit einem Gehalt an Phosphinstabilisatoren, die dadurch gekennzeichnet sind, daß die Phosphinstabilisatoren der Formel (I)

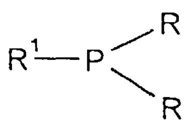

(I)

entsprechen,

worin R ein unsubstituierter oder substituierter $C_6$-$C_{14}$-Aryl-Rest ist und

worin $R^1$ einer der folgenden Reste (Ia) bis (Ih) ist

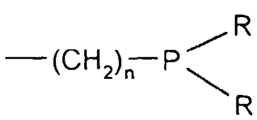

(Ia)

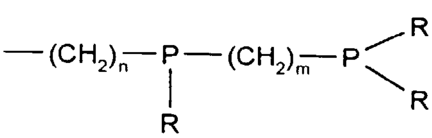

(Ib)

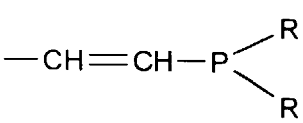

(Ic)

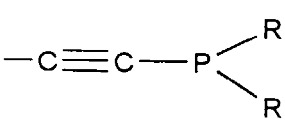

(Id)

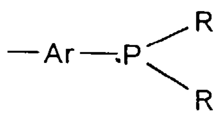

(Ie) mit Ar = R

($C_6$-$C_{14}$-Aryl-Rest)

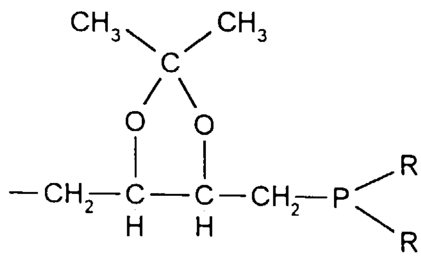

(If)

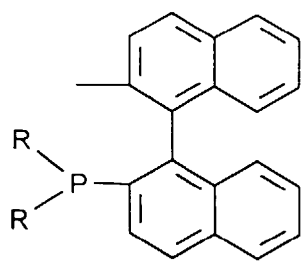

(Ig)

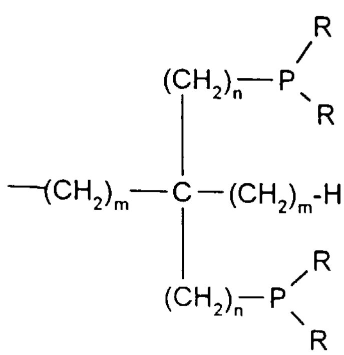

(Ih)

in denen R die für Formel (I) genannte Bedeutung hat, "n" und "m" jeweils unabhängig voneinander eine ganze Zahl von 1 bis 7 sind und wobei die H-Atome der Reste (Ia) bis (Ic) noch durch Substituenten ersetzt sein können.

Bevorzugte Reste R in (I) sind Phenyl, 4-Phenyl-phenyl und Naphthyl.

Geeignete Substituenten der Arylreste R in (I) sind F, $CH_3$, Cl, Br, J, $OCH_3$, CN, OH, Alkylcarboxy, Phenyl, Cycloalkyl, Alkyl.

Geeignete Substituenten für die H-Atome der Reste (Ia) bis (Ic) sind F, $CH_3$, Alkyl, Cycloalkyl, Cl, Aryl.

Bevorzugte Zahlen "n" und "m" sind 1, 2, 3 oder 4.

Beispiele für die erfindungsgemäß einzusetzenden Phosphine der Formel (I) sind

1,2-Bis-(di-pentafluorphenyl-phosphino)-ethan,

Bis-(diphenyl-phosphino)-acetylen,
1,2-Bis-(diphenylphosphino)-benzol,

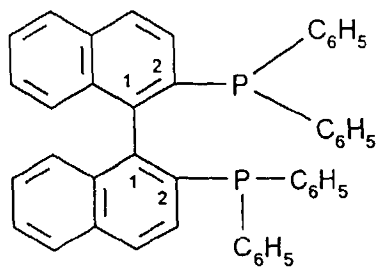

[2,2'-Bis-(diphenylphosphino)-1,1'-binaphthyl],
2,3-Bis-(diphenylphosphino)-butan,
1,4-Bis-(diphenylphosphino)-butan,
1,2-Bis-(diphenylphosphino)-ethan,
cis-1,2-Bis-(diphenylphosphino)-ethylen.

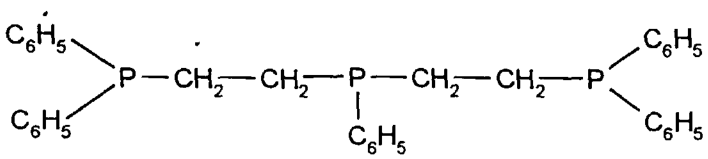

[Bis-(2-(diphenylphosphino)-ethyl)-phenylphosphin],
Bis-(diphenylphosphino)-methan,
2,4-Bis-(diphenylphosphino)-pentan,
1,3-Bis-(diphenylphosphino)-propan,
1,2-Bis-(diphenylphosphino)-propan, und

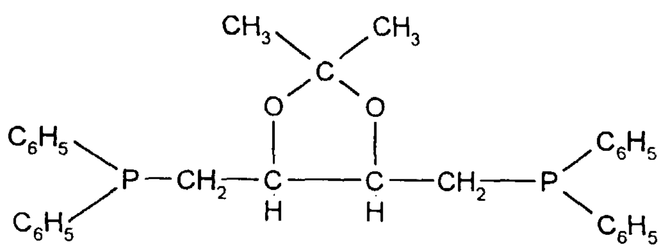

[4,5-O-Isopropyliden-2,3-dihydroxy-1,4-bis-(diphenylphosphino)-butan].

Die Verbindungen der Formel (I) können nach den folgenden Literaturhinweisen hergestellt werden: Issleib et al., Chem. Ber., 92 (1959), 3175, 3179 und Hartmann et al., Zeitschr. Anorg. Ch. 287 (1956) 261, 264.

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Ein Teil, bis zu 80 Mol-%, vorzugsweise von 20 Mol-%, bis zu 50 Mol-% der Carbonat-Gruppen in den erfindungsgemäß geeigneten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, sind, genau bezeichnet, aromatische Polyestercarbonate. Sie sollen der Einfachheit halber in vorliegender Anmeldung unter dem Oberbegriff der thermoplastischen, aromatischen Polycarbonate subsummiert werden.

Die Herstellung der erfindungsgemäß zu verwendenden Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt werden, und zwar je nach Maßgabe der in den aromatischen Polycarbonaten zu ersetzenden Carbonatstruktureinheiten durch aromatische Dicarbonsäureesterstruktureinheiten.

Einzelheiten der Herstellung von Polycarbonaten sind in Hunderten von Patentschriften seit etwa 40 Jahren niedergelegt. Beispielhaft sei hier nur auf "Schnell", Chemistry an Physics of Polycarbonates", Polymer Reviews, Volume 9, Interscience Publishers, New York, London, Sydney 1964, auf D.C. PREVORSEK, B.T. DEBONA and Y. KESTEN, Corporate Research Center, Allied Chemical Corporation, Morristown, New Jersey 07960, "Synthesis of Poly (ester Carbonate) Copolymers" in Journal of Polymer Science, Polymer Chemistry Edition, Vol. 19, 75-90 (1980), auf D. Freitag, U. Grigo, P.R. Müller, N. Nonvertue', BAYER AG, "Polycarbonates" in Encyclopedia of Polymer Science and Engineering, Volume 11, Second Edition, 1988, Seiten 648-718 und schließlich auf Dres. U. Grigo, K. Kricher und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Die thermoplastischen Polycarbonate einschließlich der thermoplastischen, aromatischen Polyestercarbonate haben mittlere Molekulargewichte $\overline{M}w$ (ermittelt durch Messung der relativen Viskosität bei 25°C in $CH_2Cl_2$ und einer Konzentration von 0,5 g pro 100 ml $CH_2Cl_2$) von 12 000 bis 120 000, vorzugsweise von 18 000 bis 80 000 und insbesondere von 22 000 bis 60 000.

Für die Herstellung der erfindungsgemäß zu verwendenden Polycarbonate geeignete Diphenole sind beispielsweise Hydrochinon. Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)cyclohexan und 1,1-Bis-(4-hydroxyphenyl)-3,3,5-trimethylcyclohexan.

Diese und weitere geeignete Diphenole sind z.B. in den US-PS 3 028 635, 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964" sowie in den japanischen Offenlegungsschriften 62039/1986, 62040/1986 und 105550/1986 beschrieben

Im Falle der Homopolycarbonate wird nur ein Diphenol eingesetzt, im Falle der Copolycarbonate werden mehrere Diphenole eingesetzt.

Geeignete Kettenabbrecher sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol.

Geeignete Monocarbonsäuren sind Benzoesäure, Alkylbenzoesäuren und Halogenbenzoesäuren.

Bevorzugte Kettenabbrecher sind die Phenole der Formel (III)

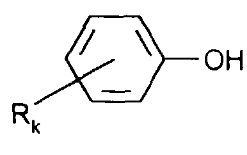

(III)

worin

$R_k$ ein verzweigter oder unverzweigter $C_8$- und/oder $C_9$-Alkylrest ist.

Die Menge an einzusetzendem Kettenabbrecher beträgt 0,5 Mol-% bis 10 Mol-%, bezogen auf Mole an jeweils

eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)phenyl)-orthoterephthalsäureester, Tetra-(4-hydroxyphenyl)-methan, Tetra-(4-(4-hydroxyphenyl-isopropyl)-phenoxy)-methan und 1,4-Bis(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wäßrig alkalischen Phase vorgelegt werden, oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureester-gruppen erfolgt im wesentlichen stöchiometrisch und auch quantitativ, so daß das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate sind das bekannte Grcnzflächenverfahren und das bekannte Schmelzumesterungsverfahren.

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

Die einzusetzenden Stabilisatormengen betragen zwischen 0,001 und 1 Gew.-%, vorzugsweise zwischen 0,002 und 0,5 Gew.-% und insbesondere zwischen 0,005 und 0,2 Gew.-%, bezogen jeweils auf Gesamtgewicht an thermoplastischem Polycarbonat und Stabilisator.

Die Einarbeitung der Phosphinstabilisatoren in die thermoplastischen, aromatischen Polycarbonate erfolgte vorteilhaft bei der Herstellung des Polycarbonates. Dabei kann das Phosphin während der Endphase der Herstellung, in welcher das geschmolzene Polycarbonat kontinuierlich in einer Förderschnecke unter Vakuum vom Lösungsmittel befreit wird, kontinuierlich durch eine geeignete Förderpumpe eingegeben werden. Selbstverständlich ist es außerdem möglich, das Polycarbonat auch nach seiner Herstellung mit dem Phosphin zu stabilisieren durch sogenanntes Auftrudeln, diese Methode ist in den Beispielen dieser Anmeldung beschrieben. Dabei wird das Phosphin 100 %ig oder in Lösung mit dem Polycarbonat vermischt und bei 270°C auf einem ZSK 32 Extruder compoundiert.

Gegenstand der vorliegenden Erfindung ist somit auch ein Verfahren zur Herstellung der stabilisierten, thermoplastischen, aromatischen Polycarbonate, das dadurch gekennzeichnet ist, daß Phosphine der Formel (I) während der Herstellung oder nach der Herstellung des thermoplastischen Polycarbonats 100 %ig oder in Lösung mit dem Polycarbonat vermischt werden und auf einen Extruder compoundiert werden.

Die erfindungsgemäß stabilisierten Polycarbonate finden besonders dort Anwendung, wo die hergestellten Formkörper einer längeren hohen Wärmebelastung ausgesetzt sind, und zudem für alle Gegenstände für die eine hohe Lichtdurchlässigkeit verlangt wird. Das gilt bevorzugt für die Verwendung auf dem lichttechnischen Sektor, z.B. für die Lampenabdeckungen oder Verglasungen mit Polycarbonatplatten, oder für optische Anwendungen wie Brillen und Compact Disks.

Gegenstand der vorliegenden Erfindung ist somit auch die Verwendung der erfindungsgemäß stabilisierten Polycarbonate zur Herstellung von Lampenabdeckungen, Verglasungen, Brillen oder Compact Disks.

Die in den Beispielen genannten Teile sind Gewichtsteile.

Die erfindungsgemäß stabilisierten thermoplastischen Polycarbonate können auch mit anderen Thermoplasten in bekannter Weise abgemischt werden, beispielsweise mit ABS-Polymerisaten, Polystyrolen, Polyalkylenterephthalaten oder Polyarylensulfonen.

**Herstellung eines Polycarbonats**

In einem 3-Halskolben, ausgestattet mit Rührer und Glaseinleitungsrohr, werden 454 Teile 2,2-Bis-(p-hydroxyphenyl)-propan und 2,5 Teile p-tert.-Butylphenol in 1,5 l Wasser suspendiert und anschließend der Sauerstoff aus der Reaktionsmischung entfernt, indem man unter Rühren 15 Minuten lang Stickstoff durch die Reaktionsmischung leitet. Dann werden 355 Teile 45%iger Natronlauge und 1000 Teile Methylenchlorid zugegeben. Die Mischung wurde auf 25°C abgekühlt. Unter Aufrechterhaltung dieser Temperatur durch Kühlen werden 237 Teile Phosgen während einer Zeitdauer von 120 Minuten zugegeben. Eine zusätzliche Menge von 75 Teilen einer 45%igen Natronlauge wurde nach 15 bis 30 Minuten zugegeben bzw. nachdem die Phosgenaufnahme begonnen hat. Zu der entstandenen Lösung werden 1,6 Teile Triethylamin zugegeben und die Mischung weitere 15 Minuten gerührt. Eine hochviskose Lösung wird erhalten, deren Viskosität durch Zugabe von Methylenchlorid reguliert wird. Die wäßrige Phase wird abgetrennt. Die organische Phase wird mit Wasser salz- und alkalifrei gewaschen. Das Polycarbonat wird aus der gewaschenen Lösung isoliert und getrocknet. Das Polycarbonat hat eine relative Viskosität von 1,29 bis 1,30, gemessen in einer 0,5%igen Lösung von Methylenchlorid bei 20°C. Das entspricht ungefähr einem Molekulargewicht von 32.000. Das so gewonnene Polycarbonat wird extrudiert und granuliert

**I. Herstellung stabilisierter Polycarbonate**

Das vorstehende Polycarbonat mit einer rel. Viskosität von 1,295 wird mit den in den Beispielen aufgeführten Stabilisatoren auf einem ZSK 32 Extruder bei 270°C kompoundiert. Die Produkte werden bei 300°C zu Normkleinstäben abgespritzt. Zum Vergleich wird das unstabilisierte Polycarbonat 1 x zusätzlich bei 270°C extrudiert. Dabei sinkt die rel. Viskosität auf 1,289.

**II. Herstellung spezieller Phosphine**

Beispiel 1

Aus Diphenylchlorphosphin und 1,2-Dichlorethan wird in Gegenwart von Natrium nach Issleib et al. (Literatur s.o.) 1,2-Bis-(diphenylphosphino)ethan hergestellt und mit 0,1 % in Polycarbonat eingearbeitet.

Beispiel 2

Aus Diphenylchlorphosphin und 1,4-Dichlorbutan wird in Gegenwart von Natrium nach Issleib et al. (Literatur s.o.) 1,4-Bis-(diphenylphosphino)butan hergestellt und mit 0,1 % in Polycarbonat eingearbeitet.

**III. Vergleichsversuche**

Vergleichsbeispiel 1

Polycarbonat, das keinen Stabilisator enthält und wie oben beschrieben verarbeitet wurde.

Vergleichsbeispiel 2 (EP 559 593)

Polycarbonat, das 0,1 % Irgafos PEPQ (Ciba Geigy)

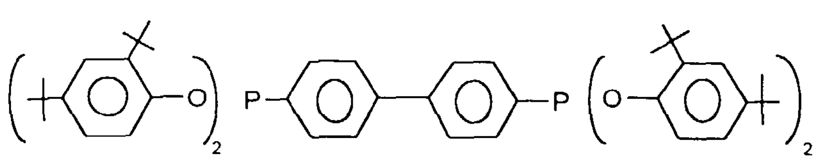

enthält und wie oben beschrieben verarbeitet wurde.

Vergleichsbeispiel 3 (EP 213 413)

Polycarbonat, das 0,1 % Triphenylphosphin (Techno-Chemie) enthält und wie oben beschrieben verarbeitet wurde.

## IV. Ergebnisse

Wärmealterung

Die in der oben beschriebenen Weise hergestellten Prüfkörper wurden im Trockenschrank bei 140°C getempert. Der jeweilige Anstieg des Yellowness-Index (Y.I.), gemessen nach ASTM 1925, im Verlauf der Wärmebehandlung dient als Maß für die zunehmende Verbräunung der Prüfkörper.

Hydrolysetest

Eine Anzahl Prüfkörper wird in destilliertem Wasser bei 100°C gelagert. Nach Ablauf bestimmter Zeitintervalle werden jeweils 10 Prüfkörper entnommen und daran die rel. Viskosität $\eta_{rel}$ (in Methylenchlorid bei 25°C in 0,5 Gew.-%) gemessen. Der Abfall von $\eta_{rel}$ ist ein Maß für die zunehmende Hydrolyse während der Wasserlagerung. Die Durchschnittswerte aus 10 Einzelmessungen sind in der nachfolgenden Tabelle aufgeführt.

| | Zeit (Std.) | Y.I. | $\eta_{rel}$ |
|---|---|---|---|
| Beispiel 1 | 0<br>1000 | 4,4<br>8,0 | 1,287<br>1,240 |
| Beispiel 2 | 0<br>1000 | 4,5<br>8,6 | 1,282<br>1,150 |
| Vergleich 1 | 0<br>1000 | 6,6<br>12,3 | 1,289<br>1,228 |
| Vergleich 2 | 0<br>1000 | 5,2<br>12,0 | 1,285<br>1,244 |
| Vergleich 3 | 0<br>1000 | 5,0<br>11,7 | 1,289<br>1,248 |

### Patentansprüche

1. Thermoplastische, aromatische Polycarbonate mit einem Gehalt an Phosphinstabilisatoren, dadurch gekennzeichnet, daß die Phosphinstabilisatoren der Formel (I)

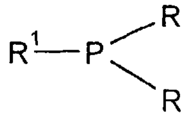

(I)

entsprechen,

worin R ein unsubstituierter oder substituierter $C_6$-$C_{14}$-Aryl-Rest ist und

worin $R^1$ einen der folgenden Reste (Ia) bis (Ih) ist

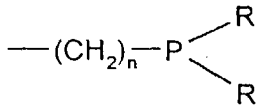

(Ia)

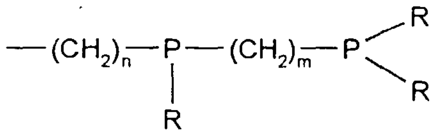

(Ib)

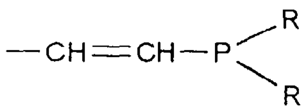

(Ic)

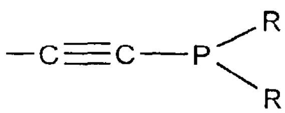

(Id)

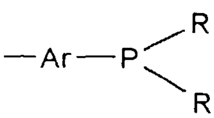

(Ie) mit Ar = R

($C_6$-C14-Aryl-Rest)

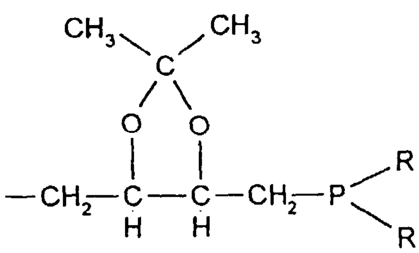

(If)

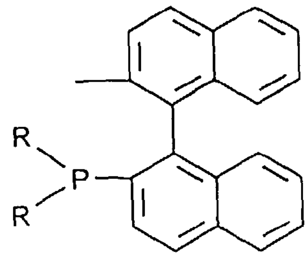

(Ig)

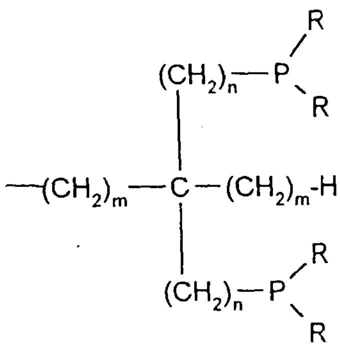

(Ih)

in denen R die für Formel (I) genannte Bedeutung hat, "n" und "m" jeweils unabhängig voneinander eine ganze Zahl von 1 bis 7 sind und wobei die H-Atome der Reste (Ia) bis (Ic) noch durch Substituenten ersetzt sein können.

**2.** Polycarbonate gemäß Anspruch 1, dadurch gekennzeichnet, daß der Gehalt an Phosphinen der Formel (I) zwischen 0,001 Gew.-% und 1 Gew.-%, bezogen auf Gesamtgewicht an Polycarbonat und Phosphinstabilisator, liegt.

**3.** Polycarbonate gemäß Anspruch 2, dadurch gekennzeichnet, daß der Gehalt zwischen 0,002 Gew.-% und 0,5 Gew.-% liegt.

**4.** Polycarbonate gemäß Anspruch 2, dadurch gekennzeichnet, daß der Gehalt zwischen 0,005 Gew.-% und 0,2 Gew.-% liegt.

**5.** Verfahren zur Herstellung der Polycarbonate des Anspruchs 1, dadurch gekennzeichnet, daß Phosphine der Formel (I) während odernach der Herstellung des thermoplastischen Polycarbonats 100 %ig oder in Lösung mit dem Polycarbonat vermischt und auf einem Extruder compoundiert werden.

**6.** Verwendung der Polycarbonate des Anspruchs 1 zur Herstellung von Lampenabdeckungen, Verglasungen, Brillen oder Compact Disks.

**Claims**

**1.** Thermoplastic aromatic polycarbonates containing phosphine stabilizers, characterized in that the phosphine stabilizers are of formula (I):

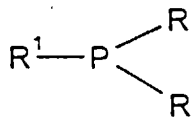

(I)

wherein R is an unsubstituted or substituted $C_6$-$C_{14}$ aryl radical and wherein $R^1$ is one of the following radicals (Ia) to (Ih) :

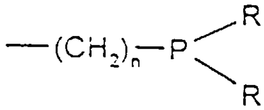

(Ia)

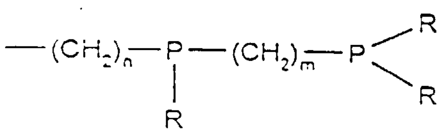

(Ib)

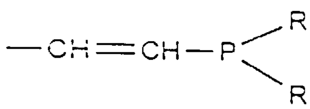

(Ic)

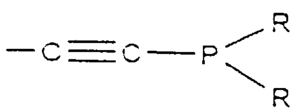

(Id)

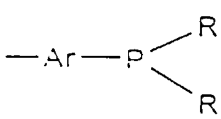

(Ie)

where Ar = R
($C_6$-$C_{14}$ aryl radical)

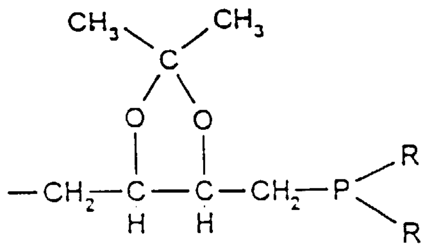

(If)

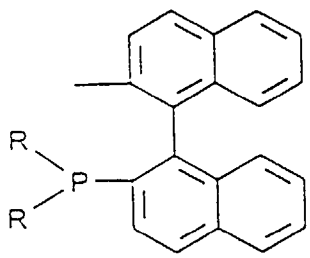

(Ig)

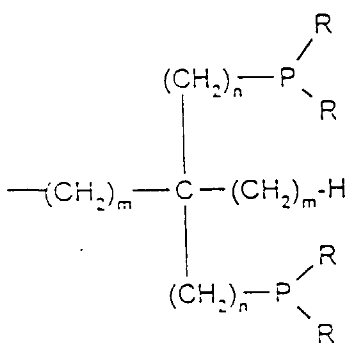

(Ih)

in which R is as defined for formula (I) and "n" and "m" are each independently of one another an integer from 1 to 7, it also being possible for the H atoms of the radicals (Ia) to (Ic) to be replaced by substituents.

2. Polycarbonates according to Claim 1, characterized in that the content of phosphines of formula (I) is between 0.001 wt.% and 1 wt.%, based on the total weight of polycarbonate and phosphine stabilizer.

3. Polycarbonates according to Claim 2, characterized in that the content is between 0.002 wt.% and 0.5 wt.%.

4. Polycarbonates according to Claim 2, characterized in that the content is between 0.005 wt.% and 0.2 wt.%.

5. Process for the preparation of the polycarbonates of Claim 1, characterized in that phosphines of formula (I), 100% pure or in solution, are mixed with the polycarbonate during or after the preparation of the thermoplastic polycarbonate and the mixture is compounded on an extruder.

6. Use of the polycarbonates of Claim 1 for the manufacture of lamp covers, windows, spectacles or compact disks.

## Revendications

1. Polycarbonates aromatiques thermoplastiques contenant des phosphines à titre de stabilisateurs, caractérisés en

ce que les phosphines à titre de stabilisateurs répondent à la formule (I)

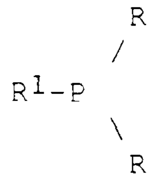

(I)

dans laquelle R représente un radical aryle en $C_6$-$C_{14}$ non substitué ou substitué et $R^1$ représente un des radicaux (Ia) à (Ih) ci-après:

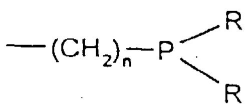

(Ia)

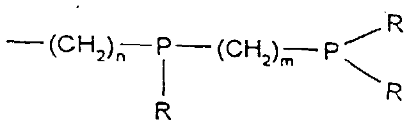

(Ib)

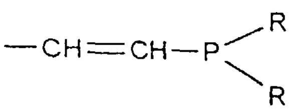

(Ic)

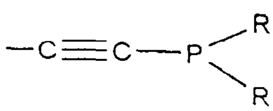

(Id)

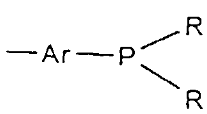

(Ie) avec Ar = R (radical aryle en $C_6$-$C_{14}$)

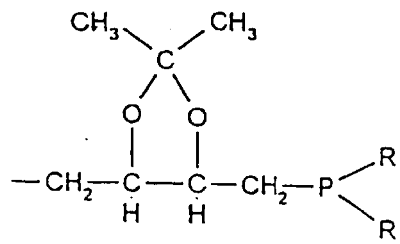

(If)

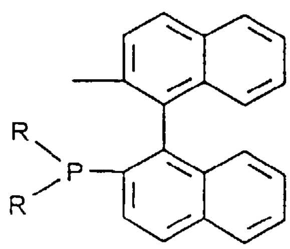

(Ig)

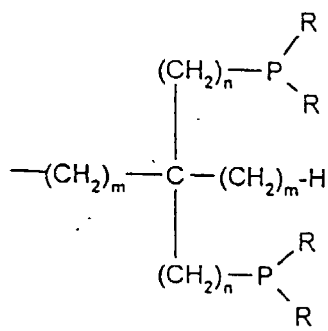

(Ih)

dans lesquels R a la signification indiquée pour la formule (I), "n" et "m" représentent respectivement, indépendamment l'un de l'autre, un nombre entier de 1 à 7 et dans lesquels les atomes d'hydrogène des radicaux (Ia) à (Ic) peuvent encore être remplacés par des substituants.

**2.** Polycarbonates selon la revendication 1, caractérisés en ce que la teneur en phosphines de formule (I) se situe entre 0,001% en poids et 1% en poids rapporté au poids total du polycarbonate et de la phosphine utilisée à titre de stabilisateur.

**3.** Polycarbonates selon la revendication 2, caractérisés en ce que la teneur se situe entre 0,002% en poids et 0,5% en poids.

**4.** Polycarbonates selon la revendication 2, caractérisés en ce que la teneur se situe entre 0,005% en poids et 0,2% en poids.

**5.** Procédé pour la préparation des polycarbonates selon la revendication 1, caractérisé en ce qu'on mélange des phosphines de formule (I) pendant ou après la préparation du polycarbonate thermoplastique, à concurrence de 100% ou en solution avec le polycarbonate, et on les combine sur une extrudeuse.

**6.** Utilisation des polycarbonates selon la revendication 1 pour la fabrication de revêtements de lampes, de vitrifications, de lunettes ou de disques compacts.